# EUROPÄISCHE PATENTSCHRIFT

(11) **EP 1 829 843 B1**
(45) Veröffentlichungstag und Bekanntmachung des Hinweises auf die Patenterteilung: **27.06.2018**
(21) Anmeldenummer: 06026557.6
(22) Anmeldetag: 21.12.2006
(51) Int. Cl.: C04B 35/573, C04B 35/64, F27B 9/02, F27B 9/04, F27B 9/20, F27B 9/36

(54) **VORRICHTUNG ZUM BEHANDELN VON WERKSTÜCKEN AUS PORÖSEM KOHLENSTOFF-MATERIAL**
DEVICE FOR TREATING PIECES OF POROUS CARBON MATERIAL
APPAREIL POUR TRAITER DES PIECES POREUSES EN CARBONE

(30) Priorität: 01.03.2006 DE 102006009388
(43) Veröffentlichungstag der Anmeldung: 05.09.2007
(73) Patentinhaber: AUDI AG, 85045 Ingolstadt (DE)
(72) Erfinder: Kienzle, Andreas, 86753 Balgheim (DE); Daimer, Johann, 64546 Mörfelden/Walldorf (DE); Beck, Rudi, 85751 Mönchsdeggingen (DE); Mederle, Otto, 86405 Meitingen (DE); Schwartz, Matthieu, 86150 Augsburg (DE); Rosenlöcher, Jens, 86161 Augsburg (DE)
(74) Vertreter: Bauer, Dominik Michael

(56) Entgegenhaltungen:
- EP-A- 0 453 592
- EP-A- 1 607 704
- DE-A1- 19 710 105
- DE-A1- 19 747 018
- DE-T2- 60 016 818
- JP-A- 6 048 837
- US-A- 6 126 749

## Beschreibung

Die vorliegende Erfindung betrifft eine Vorrichtung zur Silicierung von kohlenstoffhaltigen Werkstoffen.

Aus dem Patent US 6,126,749 A sind ein Verfahren und eine Vorrichtung zur Herstellung von reaktionsgebundenen Körpern aus Siliciumcarbid bekannt, in denen ein Kohlenstoff-Vorformling zunächst bei 800 °C unter einer Stickstoff-Atmosphäre unter Zersetzung des Phenolharz-Bindemittels behandelt wird, und dieser Vorformling dann unter einem vermindertem Druck von unter 1,33 Pa (10⁻² Torr) auf einem Band zunächst einem Infiltrationsschritt bei 1450 °C bis 1700 °C, wobei das Silicium-Vorratsgefäß bei 1450 °C bis 1500 °C gehalten wird, und dann bei 1600 °C bis 1800 °C einem weiteren Schritt unterworfen wird, bei dem das überschüssige Silicium entfernt wird. Nach diesem Schritt wird der silicierte Körper aus dem Reaktionsofen ausgetragen.

Aus der Patentanmeldung JP Hei 06-048 837 A ist ein Verfahren zur Herstellung eines mit Silicium imprägnierten Körpers aus Siliciumcarbid bekannt, bei dem eine Mischung von Siliciumcarbid-Pulver mit Graphitpulver und einem Silicon-Harz granuliert, kompaktiert und bei ca. 800 °C calciniert wird. Der calcinierte Körper wird unter vermindertem Druck auf 1500 °C erwärmt und mit geschmolzenem Silicium imprägniert. Der so hergestellte Körper wird anschließend bei 1600 °C bis 1800 °C gesintert.

Im Patent DE 600 16 818 T2 wird ein Verbundmaterial mit Fasern aus Kohlenstoff beschrieben, zu dessen Herstellung Laminate aus vorgeformten Garnen aus Carbonfasern bereitgestellt werden, die in einer nicht-oxydierenden Atmosphäre gebrannt werden, sodann wird die Temperatur der gebrannten Körper auf 1450 °C bis 2500 °C erhöht, und metallisches Silicium wird aufgeschmolzen und in die offenen Poren der gebrannten Körper imprägniert. Eine Nachreaktion bei 2000 °C bis 2800 °C schließt sich an, wozu der Druck auf 1,013 × 10⁵ Pa (1 atm) erhöht wird. In dieser Nachreaktion soll eine weitgehende Umwandlung des Siliciumcarbid in die β-Form erfolgen.

In der Anmeldung EP 0 453 592 ist ein Verfahren zur Herstellung von silicierten Siliciumcarbid-Artikeln beschrieben, bei dem ein spritzgegossener Körper aus Siliciumcarbid-Partikeln und einem organischen Binder zunächst durch Erhitzen in einen porösen Körper umgewandelt wird, der Siliciumcarbid und elementaren Kohlenstoff enthält, der anschließend mit geschmolzenem Silicium infiltriert wird, wobei der elementare Kohlenstoff zu Siliciumcarbid umgesetzt wird. Dabei wird der Anguß des spritzgegossenen Körpers als Zuführung für das geschmolzene Silicium genutzt.

Aus der Offenlegungsschrift DE 197 47 018 A1 ist eine Vorrichtung zur Wärmebehandlung von Werkstücken bekannt, die mehrere evakuierbare Kammern aufweist.

Die Patentanmeldung EP 1 607 704 A1 betrifft einen kontinuierlich zu betreibenden Ofen zum Brennen von Fliesen oder zum Tempern von gepressten Stahlteilen.

Die Patentanmeldung DE 197 10 105 A1 betrifft einen mit Graphitkurzfasern verstärkten Siliciumcarbidkörper, und ein Verfahren zu dessen Herstellung, bei dem sich der zu silicierende Körper, der ein den ganzen Körper durchsetzendes, offenes Porensystem besitzen muß, in einem Behälter befindet, auf dessen Boden geschmolzenes Silicium ist. Siehe Seite 4, Zeile 67, bis Seite 5, Zeile 1. Dabei liegen die Körper, die siliciert werden sollen, auf porösen, bezogen auf das Silicium sehr saugfähigen Kohlenstoffkörpern, deren unterer Teil im flüssigen Silicium steht. Das Silicium steigt dann durch diese Dochtkörper in die zu silicierenden Körper, ohne daß letztere direkte Verbindung mit dem Siliciumbad haben. Siehe Seite 5, Zeile 29 bis 31. Im Ausführungsbeispiel (Seite 6, Zeilen 23 bis 30) ist ein Ofen genannt, auf dessen Boden sich eine Wanne mit Silicium befindet, in der drei säulenförmige Unterstützungen aus stark porösem CFC-Material (mit Fasern aus Kohlenstoff verstärktem Kohlenstoff) als Dochte angeordnet sind, auf welche der zu silicierende Körper aufgelegt wird. Der Ofen wird auf einen Druck von 3 hPa (3 mbar) ausgepumpt und innerhalb von zwei Stunden auf eine Temperatur von 1750 °C erhitzt, nach Erreichen dieser Temperatur weitere zehn Minuten auf 1750 °C gehalten, und danach abgekühlt.

Ein Verfahren zur Silicierung von Kohlenstoff-Werkstoffen wurde von einer Arbeitsgruppe der DLR (Deutsche Forschungsanstalt für Luft- und Raumfahrt e.V.), Stuttgart, Institut für Bauweisen- und Konstruktionsforschung, bei der VDI-Werkstoff-Tagung in Duisburg vom 9. bis 10. März 1994 beschrieben. Kohlenstoff-Werkstoffe verstärkt mit Fasern aus Kohlenstoff wurden dazu mit geschmolzenem Silicium infiltriert in einer sogenannten "Flüssig-Silicierungs-Methode". Durch Wärmebehandlung reagiert das elementare Silicium mit dem Kohlenstoff zu Siliciumcarbid. Aus solchen Werkstoffen lassen sich Strukturbauteile und insbesondere Reibkörper für Brems- und Kupplungssysteme in Automobilen herstellen.

Ähnliche Verfahren sind beispielsweise in der EP 0 956 276 beschrieben, wobei die zu silicierenden Kohlenstoff-Werkstücke und geeignet gebundenes pulverförmiges Silicium gemeinsam erhitzt werden, das aufgeschmolzene Silicium in die Kohlenstoff-Werkstücke eindringt und mit dem Kohlenstoff zumindest teilweise zu Siliciumcarbid reagiert.

Alle bekannten Verfahren sind jedoch Chargenverfahren, bisher ist lediglich eine chargenweise Umwandlung von Kohlenstoff-Werkstoffen in Werkstoffe mit einer Siliciumcarbid enthaltenden Matrix möglich gewesen. Dabei müssen die Öfen, in denen das Silicium aufgeschmolzen wird, und in denen die Reaktion von flüssigem Silicium mit Kohlenstoff zu Siliciumcarbid vorgenommen wird, zunächst beladen, unter Inertgasatmosphäre aufgeheizt und gegebenenfalls evakuiert werden, nach der Reaktion zu Siliciumcarbid mit der erforderlichen Haltezeit abgekühlt und entladen werden. Ein derartiges Verfahren erfordert lange Heiz- und Kühlzeiten und ist ungünstig bezüglich der Energienutzung.

Es besteht daher die Aufgabe, eine Vorrichtung anzugeben, mit der eine halbkontinuierlich zu betreibende Behandlung von Werkstücken aus gegebenenfalls mit Fasern, bevorzugt aus Kohlenstoff, verstärktem porösem Kohlenstoff mit flüssigem Silicium unter mindestens teilweiser Umwandlung zu Siliciumcarbid möglich ist.

Die Aufgabe wird gelöst durch eine Vorrichtung gemäß Anspruch 1, in der die folgenden Schritte durchgeführt werden:
a Vorheizen von porösen Kohlenstoff-Werkstücken unter Inertgas auf die gewählte Betriebstemperatur T_{B}1 in der Kammer **O1** im Bereich von 1300 °C bis 1800 °C, durch Einführen der Werkstücke in die erste Kammer **O1**, Spülen der Kammer nach dem Schließen der Schleuse mit einem Inertgasschwall und Aufheizen von Raumtemperatur auf die Betriebstemperatur T_{B}1,
b Absenken des Drucks in der Kammer **O1** spätestens vor dem Öffnen der Schleuse **20** zur Kammer **O2** auf den Betriebsdruck von unter 10 hPa,
c Zuführen von flüssigem Silicium zu den porösen Kohlenstoff-Werkstücken, die durch eine Transportvorrichtung in der Kammer **O2** aufgenommen werden und auf die in der Silicierungsvorrichtung angeordneten Auflagen **26,** die als poröse Dochte ausgebildet sind, aufgesetzt werden bei einem Betriebsdruck p_{B}2 in der Kammer **O2** von höchstens 1 Pa und einer Betriebstemperatur T_{B}2 in der Kammer **O2** im Bereich von 1450 °C bis 1700 °C, und Tränken der porösen Kohlenstoff-Werkstücke mit flüssigem Silicium, wobei das Silicium zumindest teilweise mit dem in dem Werkstück vorhandenen Kohlenstoff zu Siliciumcarbid reagiert, unter Bildung eines silicierten Werkstücks,
d Abheben der silicierten Werkstücke von den Dochten **26** und Transportieren der silicierten Werkstücke durch die Schleuse **30** in die Kammer **O3**, Reaktion des flüssigen Silicium in den Werkstücken bei einer Temperatur T_{B}3 in der Kammer **O3** im Bereich von 1500 °C bis 1900 °C, wobei die Betriebstemperatur T_{B}3 in der Kammer **O3** mindestens 50 K mehr beträgt als die Betriebstemperatur T_{B}2, unter Bildung von Siliciumcarbid aus Kohlenstoff und Silicium
e Begasen des Werkstücks in der Kammer **O3** durch Einblasen von kaltem Inertgas und Abkühlen von der Betriebstemperatur T_{B}3 auf eine Konditionierungstemperatur Tₖ im Bereich von 500 °C bis 300 °C, wobei der Druck ansteigt von anfänglich unter 1 hPa bis auf Normaldruck von 10⁵ Pa,
f Transport der Werkstücke **96** durch die Schleuse **40** in die Kammer **O4**, und Abkühlen der Werkstücke in der Position **97** auf Raumtemperatur, zunächst mit Inertgas und ab Temperaturen von höchstens 300 °C auch mit Luft, und Entnahme der fertigen Werkstücke **98** durch die Schleuse **50,**
wobei in der Kammer **O2** für den Verfahrensschritt c eine Silicierungsvorrichtung vorgesehen ist, die ein Becken mit flüssigem Silicium und als poröse Dochte ausgeführte Auflagen für das Werkstück umfasst, und wobei die Temperatur T_{B}3 mindestens 50 K höher als die Temperatur T_{B}2 ist, und das Werkstück in der Kammer **O3** bei dem Verfahrensschritt d nicht mehr in Kontakt mit flüssigem Silicium außerhalb des Werkstücks steht.

Bevorzugte Ausführungsformen sind in den abhängigen Ansprüchen angegeben.

In bevorzugter Weise wird im Schritt b das Absenken des Drucks auf den Betriebsdruck p_{B}1 nach oder vor dem Heizen oder während des Heizens vorgenommen, stets jedoch nach dem Schritt des Spülens mit Inertgas.

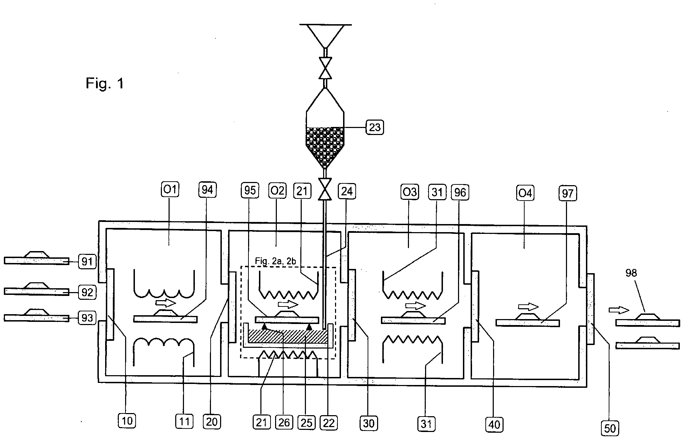

Die erfindungsgemäße Vorrichtung besteht aus mindestens vier Kammern **O1** bis **O4**, die durch Schleusen miteinander verbunden sind, wobei jede der Kammern unabhängig von ihren Nachbarn heizbar, kühlbar, evakuierbar und mit geeigneten Gasen zu befüllen oder zu spülen ist. Dabei ist jede der Kammern **Oᵢ** mit mindestens einer Transport- oder Fördereinrichtung versehen, mit deren Hilfe die Werkstücke von der vorigen Kammer **O**ᵢ₋₁ in die Kammer **O**ᵢ und aus der Kammer **O**ᵢ in die nachfolgende Kammer **O**ᵢ₊₁ transportiert werden, wobei beispielsweise in der Ausgestaltung mit 4 Kammern **O**ᵢ₌₀ der Einlass und **O**ᵢ₌₅ der Auslass aus der aus vier Kammern bestehenden Anordnung ist. Im Fall von vier Kammern wie in Fig. 1 dargestellt kann der Index i die Werte 1, 2, 3 und 4 annehmen.

Die erfindungsgemäße Vorrichtung erlaubt die räumliche Trennung der einzelnen Verfahrensschritte und eine taktartige halbkontinuierliche Förderung der Werkstücke in durch Schleusen voneinander und der Umgebung getrennte Kammern, dabei ergibt sich die Möglichkeit, den Betriebszustand (Temperatur, Druck) in den einzelnen Kammern möglichst konstant zu lassen; dies führt zu gleichmäßigen Betriebszuständen, Verringerung des Energiebedarfs, und höherer Flexibilität in der Fertigung. Die Förderung oder der Transport der Werkstücke kann durch an sich bekannte Mittel und Verfahren erfolgen, beispielsweise durch Gleiten oder Förderung mittels eines Schiebers, durch Transport auf Rollen, mittels eines oder mehrerer Hubbalken, oder auf einer Gliederkette. Dabei werden Materialien für die Transportmittel eingesetzt, die den gewählten Temperaturen und den eingesetzten Medien standhalten, beispielsweise ausgewählt aus Graphit und anderen Kohlenstoffmaterialien, die mit Fasern z. B. aus Kohlenstoff verstärkt sein können, sowie auch Werkstoffe aus Bornitrid oder refraktäre Werkstoffe, die mit Bornitrid beschichtet sind. Dabei können die Schritte a und b sowie die Schritte d und e jeweils in einer gemeinsamen Kammer durchgeführt werden, während ansonsten für jeden der Verfahrensschritte mindestens eine separate Kammer vorgesehen ist.

Die Beheizung in den Kammern erfolgt mit bekannten Heizgeräten, insbesondere Infrarotstrahler, induktive Heizungen, Mikrowellenbeheizung und Beheizung durch gewärmtes Gas (Inertgas). Die Kühlung erfolgt durch Durchströmen der betreffenden Kammer mit einem gekühlten Gasstrom, wobei bei höheren Temperaturen Inertgase wie Stickstoff und Argon bevorzugt werden, während bei Temperaturen von höchstens 300 °C auch Luft verwendet werden kann.

Es ist bevorzugt, in der Kammer **O1** eine Induktionsheizung zu benutzen, da diese Art der Beheizung sehr rasch große Energiemengen in das Werkstück einbringen kann.

Die Vorrichtung wird durch die Zeichnungen erläutert. Dabei zeigen
- Fig. 1: einen schematischen Schnitt durch eine Anordnung mit vier Kammern; zur Verbesserung der Übersichtlichkeit sind die Zu- und Abführungen für die verwendeten Gase nicht eingezeichnet,
- Fig. 2a: einen Ausschnitt aus der zweiten Kammer **O2** gemäß der Fig. 1, mit der detaillierten Darstellung der Lagerung des Werkstücks **95** auf (zwei dargestellten) vorzugsweise porösen Dochten **26,** die das flüssige Silicium zu dem Werkstück **95** führen,
- Fig. 2b: einen Ausschnitt aus der Kammer **O2** gemäß Fig. 2a, mit der detaillierten Darstellung einer alternativen Ausführungsform, wobei das Werkstück selbst angeformte Nippel **201** aufweist, und
- Fig. 2c: einen vergrößerten Schnitt durch ein Werkstück mit einem angeformten Nippel **201.**

Bevorzugt wird in einer in Fig. 1 dargestellten Vorrichtung aus vier Kammern so verfahren, dass in die erste Kammer **O1** durch die Schleuse **10** von außen nacheinander die Werkstücke eingeführt werden, hier dargestellt als die als nächstes einzuführenden und als **91, 92** und **93** bezeichnet. Nach dem Schließen der Schleuse **10** wird
die Kammer **O1** gemäß dem Verfahrensschritt a mit einem Inertgasschwall gespült, bevorzugt mit Stickstoff oder Argon, nach dem Verdrängen der Luft mittels gegebenenfalls mehrerer Sequenzen von Inertgasspülen und Evakuieren wird das bereits in der Kammer befindliche Werkstück **94** bevorzugt durch eine Induktionsheizung **11** von Raumtemperatur auf die Betriebstemperatur T_{B}1 erwärmt, die von 1300 °C bis 1800 °C, bevorzugt 1350 °C bis 1750 °C betragen kann. Dabei wird der Betriebsdruck von 1 bar (Außendruck, 10⁵ Pa) auf einen Wert p_{B}1 von höchstens 100 mbar (100 hPa), besonders bevorzugt bis zu 50 hPa (50 mbar), und insbesondere höchstens 20 mbar (20 hPa) erniedrigt. Diese Absenkung des Drucks gemäß dem Verfahrensschritt b kann vor dem Heizen, während des Heizens oder nach dem Heizen erfolgen.

Spätestens vor dem Öffnen der Schleuse **20** wird in der Kammer **O1** ein Unterdruck erzeugt, wie er auch bevorzugt ständig in der Kammer **O2** herrscht, von höchstens 1 Pa (10⁻² mbar). Ist dieser Druck erreicht, wird das Werkstück durch die Schleuse **20** in die Kammer **O2** transportiert, wo es jetzt als **95** bezeichnet wird. Nach dem Schließen der Schleuse **20** wird ein neues Werkstück von außen durch die Schleuse **10** in die Kammer **O1** eingeführt und wie oben beschrieben aufgeheizt.

In der Kammer **O2** wird das Werkstück **95** bei einem Betriebsdruck p_{B}2 von höchstens 10⁻² mbar (1 Pa) und bei einer über die Heizung **21** einstellbaren Betriebstemperatur T_{B}2 von 1450 °C bis 1700 °C von einer nicht dargestellten Transportvorrichtung aufgenommen und auf die in der Silicierungsvorrichtung **27** angeordneten Auflagen (poröse Dochte) **26** aufgesetzt. In dieser Silicierungsvorrichtung **27** gelangt gemäß dem Verfahrensschritt c in einem Becken **22** befindliches flüssiges Silicium **25** über die porösen Dochte **26** in das Werkstück **95** aus Kohlenstoff. Bei der in der Kammer herrschenden Temperatur von zwischen 1450 °C und 1700 °C dringt Silicium in die Poren des Werkstücks **95** ein und reagiert zumindestens teilweise gemäß dem Verfahrensschritt d mit dem in dem Werkstück vorhandenen Kohlenstoff zu Siliciumcarbid. Das Werkstück wird nach dieser Behandlung als "siliciertes Werkstück" bezeichnet.

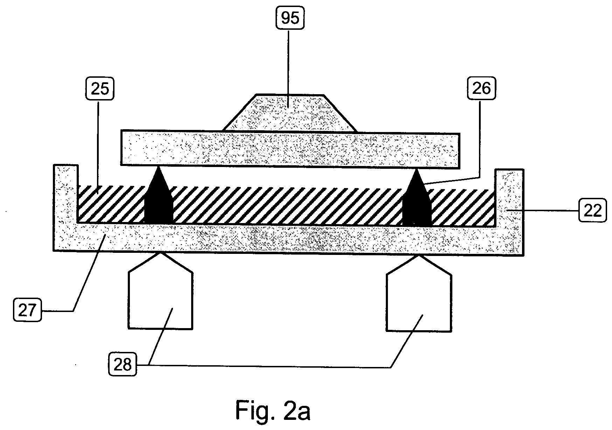

In einer bevorzugten Ausführungsform wird das Becken **22** in der Kammer **O2** auf eine oder mehrere (in der Zeichnung Fig. 2a in der Anzahl von zwei dargestellten) Druckmessdosen **28** gestellt; dies ermöglicht, durch Wägung des Beckens vor dem Aufsetzen des Werkstücks **95** und nach der Infiltration und dem Entfernen des Werkstücks **95** die Masse des im Werkstück aufgenommenen Siliciums festzustellen. Nach der Silicierung wird das silicierte Werkstück **95** von den Dochten abgehoben und durch die Schleuse **30** in die Kammer **O3** transportiert.
Der Pegel des flüssigen Siliciums in dem Becken **22** wird nach jedem Takt (Ausfahren eines silicierten Werkstücks **95** aus **O2** und Einlass eines frischen vorgeheizten Werkstücks aus der Kammer **O1**) wieder auf den voreingestellten Wert ergänzt, dazu dient ein Reservoir **23** mit flüssigem Silicium, das durch ein Rohr **24** mit dem Becken **22** verbunden ist.
In der Kammer **O3** wird durch weiteres Aufheizen mit der Heizung **31** die Reaktion gemäß dem Verfahrensschritt d in dem silicierten Werkstück in dem gewünschten Maß vervollständigt, wobei sich durch die räumliche Trennung von der Kammer **O2** die günstige Möglichkeit ergibt, bei einer Temperatur T_{B}3, die mindestens 50 K oberhalb der Temperatur T_{B}2 ist, das Werkstück in der Kammer **O3** zu tempern, ohne Gefahr zu laufen, dass wie bei der Wahl einer höheren Temperatur in der Kammer **O2** durch den höheren Dampfdruck Silicium aus dem Becken **22** entweicht. Es wurde nämlich bei den Versuchen, die der vorliegenden Erfindung zugrundelagen, festgestellt, dass das in den Poren des Werkstücks (nun **96**) aufgesaugte Silicium einen deutlich niedrigeren Dampfdruck hat gegenüber dem Silicium im Bad **22** bei derselben Temperatur.
Der Temperaturbereich für eine derartige Nachreaktion ist von 1500 °C bis 1900 °C, besonders bevorzugt von 1600 °C bis 1900 °C, und insbesondere von 1700 °C bis 1800 °C. Die Bildung von Siliciumcarbid kann so deutlich schneller verlaufen, was zu einer erwünschten Verkürzung der Zykluszeiten in dem Verfahren führt.

Die Beheizung in den Kammern **O2** und **O3** erfolgt bevorzugt durch Strahlungsheizung, beispielsweise mit durch Joule'sche Wärme zum Glühen gebrachten Graphitheizkörpern **21** und **31.** Sobald die Reaktion zum Siliciumcarbid in dem gewünschten Maß erfolgt ist, wird das Werkstück in der Kammer **O3** durch Einblasen von kaltem Inertgas gemäß dem Verfahrensschritt e gekühlt auf eine Konditionierungstemperatur T_{K} im Bereich von 500 °C bis 300 °C. Der Betriebsdruck p_{B}3 steigt dabei von anfänglich (Nachreaktion) unter 1 mbar (1 hPa) auf Normaldruck (10⁵ Pa = 1 bar). Anschließend wird das Werkstück **96** durch die Schleuse **40** in die Kammer **O4** gebracht und dort in der Position **97** gemäß dem Verfahrensschritt f weiter zunächst mit Inertgas, ab Temperaturen von höchstens 300 °C auch mit Luft auf Raumtemperatur abgekühlt. Durch die Schleuse **50** kann dann das fertige Werkstück **98** ausgetragen werden.
Selbstverständlich wird, bevor das nächste Werkstück **95** in die Kammer **O3** zur Nachreaktion überführt wird, diese Kammer **O3** wieder auf den Betriebsdruck p_{B}3 evakuiert.

In dem Verfahren hat sich bei einer Ausführungsform mit vier Kammern eine Verweilzeit der Werkstücke in den Kammern **O1** bis **O4** von jeweils drei Minuten bis zu zwanzig Minuten als günstig erwiesen.

Durch das Verfahren wird sichergestellt, dass die in die Kammer **O2** zum Silicieren gebrachten Werkstücke **95** stets auf die in **O2** herrschende Betriebstemperatur gebracht sind, und dass der Betriebsdruck in **O2** stets erhalten bleibt. Diese Gleichmäßigkeit von Druck und Temperatur in dem Silicierungsschritt hat sich für das Erreichen einer konstanten Produktqualität als wesentlich erwiesen. Ein weiterer Vorteil ist, dass die Werkstücke nicht im Kontakt mit dem Siliciumbad abgekühlt werden, dadurch wird vermieden, dass durch Volumenkontraktion des Siliciums beim Abkühlen gebildete Poren durch nachgesaugtes Silicium gefüllt werden. Soweit in einer der Kammern mehrere Verfahrensstufen durchgeführt werden, beispielsweise in **O3** die Stufe der Nachreaktion, die gegebenenfalls bei gegenüber **O2** erhöhter Temperatur
erfolgt, und anschließend die Abkühlung, ist es weiter bevorzugt, diese Kammern zu unterteilen. Im Fall von **O3** sieht eine derartige Unterteilung gemäß den Verfahrensschritten d und e vor, zunächst die Nachreaktion bei der höheren Temperatur durchzuführen, und anschließend das Werkstück wiederum durch eine Schleuse in eine zusätzliche zwischen **O3** und **O4** angeordnete Kammer zum Abkühlen zu bringen. Auf diese Weise wird erreicht, dass die Kammer **O3** bei konstanter Temperatur betrieben werden kann, und die zwischen **O3** und **O4** angeordnete Kammer lediglich zum Abkühlen dient.

Es ist ebenfalls möglich, zwei Kammern mit demselben Verfahrensschritt hintereinander anzuordnen, wenn die erforderliche Verweilzeit für einen Verfahrensschritt deutlich von der für die anderen Verfahrensschritte abweicht, um auf diese Weise einen gleichmäßigen Takt für alle Kammern zu erreichen. Die Mindestzahl der für das Verfahren erforderlichen Kammern beträgt vier.

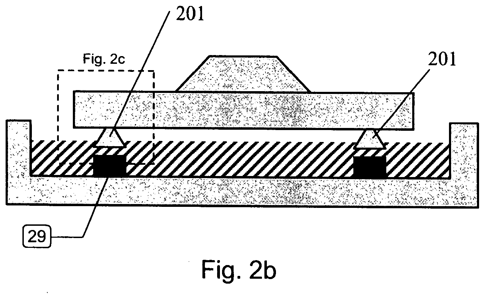

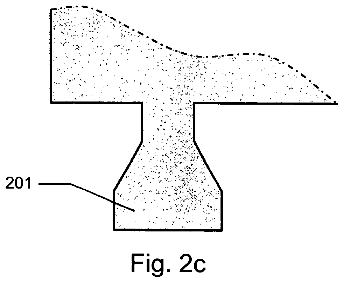

In einer weiteren Ausführungsform können die Werkstücke angeformte Nippel **201** an einer flachen Seite aufweisen, wobei diese Nippel **201** zu dieser flachen Seite hin eine Einschnürung aufweisen, wie dies in der Fig. 2b und vergrößert in der Fig. 2c dargestellt ist. Diese Nippel **201** tauchen in das flüssige Silicium **25** in dem Silicium-Bad **27** ein, oder stehen auf den Stützen **29.** Nach der Entnahme der fertigen Werkstücke aus der Vorrichtung lassen sich diese Nippel **201** leicht abbrechen, da das Ausmaß der Einschnürung so gewählt wird, um dies zu ermöglichen.

Es ist selbstverständlich möglich, anstelle von reinem Silicium auch Legierungen oder flüssige Mischungen von Silicium mit einem oder mehreren anderen Elementen zur Infiltration einzusetzen. Insbesondere haben sich Zuschläge von Eisen (in einem Massenanteil von bis zu 6 % in der Mischung), refraktären Metallen wie Chrom, Molybdän, Wolfram, Zirkon (in einem Massenanteil von jeweils bis zu 3 % in der Mischung) sowie von Mangan, Aluminium, Kobalt und Nickel (in einem Massenanteil von jeweils bis zu 3 % in der Mischung) erwiesen.

### Liste der Bezugszeichen

- O1: Kammer 1
- O2: Kammer 2
- O3: Kammer 3
- O4: Kammer 4
- 10: Schleuse
- 11: Induktionsheizung
- 20: Schleuse
- 21: Heizung
- 22: Becken
- 23: Reservoir mit flüssigem Silicium
- 24: Rohr
- 25: flüssiges Silicium
- 26: Dochte
- 27: Silicierungsvorrichtung
- 28: Druckmessdosen
- 29: Stützen
- 30: Schleuse
- 31: Heizung
- 40: Schleuse
- 50: Schleuse
- 91,92,93: Werkstücke
- 94: Werkstück in der Kammer O1
- 95: siliciertes Werkstück in der Kammer O2
- 96: siliciertes Werkstück in der Kammer O3
- 97: siliciertes Werkstück in der Kammer O4
- 98: fertiges siliciertes Werkstück

## Patentansprüche

1. Vorrichtung zum Behandeln von Werkstücken aus porösem Kohlenstoff-Material mit flüssigem Silicium unter Bildung von Siliciumcarbid, bestehend aus mindestens vier Kammern (**O1,O2,O3** und **O4**), die getrennt voneinander heizbar, kühlbar, evakuierbar und mit Gasen spülbar sind, und die durch Schleusen miteinander verbunden sind, wobei in einer Ausführungsform mit vier Kammern jeweils eine Kammer für die Verfahrensschritte c und f, und jeweils eine Kammer für die jeweils darin nacheinander auszuführenden Verfahrensschritte a und b sowie d und e vorgesehen ist, wobei die Schritte definiert sind als
a Vorheizen von porösen Kohlenstoff-Werkstücken unter Inertgas auf die gewählte Betriebstemperatur T_{B}1 in der Kammer **01** im Bereich von 1300 °C bis 1800 °C, durch Einführen der Werkstücke in die erste Kammer **01,** Spülen der Kammer nach dem Schließen der Schleuse mit einem Inertgasschwall und Aufheizen von Raumtemperatur auf die Betriebstemperatur T_{B}1,
b Absenken des Drucks in der Kammer **O1** spätestens vor dem Öffnen der Schleuse **20** zur Kammer **02** auf den Betriebsdruck von unter 10 hPa,
c Zuführen von flüssigem Silicium zu den porösen Kohlenstoff-Werkstücken, die durch eine Transportvorrichtung in der Kammer **02** aufgenommen werden und auf die in der Silicierungsvorrichtung angeordneten Auflagen **26,** die als poröse Dochte ausgebildet sind, aufgesetzt werden bei einem Betriebsdruck p_{B}2 in der Kammer **02** von höchstens 1 Pa und einer Betriebstemperatur T_{B}2 in der Kammer **02** im Bereich von 1450 °C bis 1700 °C, und Tränken der porösen Kohlenstoff-Werkstücke mit flüssigem Silicium, wobei das Silicium zumindest teilweise mit dem in dem Werkstück vorhandenen Kohlenstoff zu Siliciumcarbid reagiert, unter Bildung eines silicierten Werkstücks,
d Abheben der silicierten Werkstücke von den Dochten **26** und Transportieren der silicierten Werkstücke durch die Schleuse **30** in die Kammer **03,** Reaktion des flüssigen Silicium in den Werkstücken bei einer Temperatur T_{B}3 in der Kammer **03** im Bereich von 1500 °C bis 1900 °C, wobei die Betriebstemperatur T_{B}3 in der Kammer **03** mindestens 50 K mehr beträgt als die Betriebstemperatur T_{B}2 unter Bildung von Siliciumcarbid aus Kohlenstoff und Silicium,
e Begasen des Werkstücks in der Kammer **03** durch Einblasen von kaltem Inertgas und Abkühlen von der Betriebstemperatur T_{B}3 auf eine Konditionierungstemperatur Tₖ im Bereich von 500 °C bis 300 °C, wobei der Druck ansteigt von anfänglich unter 1 hPa bis auf Normaldruck von 10⁵ Pa,
f Transport der Werkstücke **96** durch die Schleuse **40** in die Kammer **04,** und Abkühlen der Werkstücke in der Position **97** auf Raumtemperatur, zunächst mit Inertgas und ab Temperaturen von höchstens 300 °C auch mit Luft, und Entnahme der fertigen Werkstücke **98** durch die Schleuse **50,**
wobei in der Kammer **02** für den Verfahrensschritt c eine Silicierungsvorrichtung vorgesehen ist, die ein Becken mit flüssigem Silicium und als poröse Dochte ausgeführte Auflagen für das Werkstück umfasst, und wobei die Temperatur T_{B}3 mindestens 50 K höher als die Temperatur T_{B}2 ist, und das Werkstück in der Kammer **03** für den Verfahrensschritt d nicht mehr in Kontakt mit flüssigem Silicium außerhalb des Werkstücks steht.

2. Vorrichtung gemäß Anspruch 1 mit fünf Kammern, die getrennt voneinander heizbar, kühlbar, evakuierbar und mit Gasen spülbar sind, und die durch Schleusen miteinander verbunden sind, wobei jeweils getrennte Kammern für die Verfahrensschritte d und e vorgesehen sind.

3. Vorrichtung gemäß Anspruch 1 mit fünf Kammern, die getrennt voneinander heizbar, kühlbar, evakuierbar und mit Gasen spülbar sind, und die durch Schleusen miteinander verbunden sind, wobei jeweils getrennte Kammern für die Verfahrensschritte a und b vorgesehen sind.

4. Vorrichtung gemäß Anspruch 1 mit sechs Kammern, die getrennt voneinander heizbar, kühlbar, evakuierbar und mit Gasen spülbar sind, und die durch Schleusen miteinander verbunden sind, wobei jeweils getrennte Kammern für die Verfahrensschritte a und b und für die Verfahrensschritte d und e vorgesehen sind.

5. Vorrichtung nach einem der Ansprüche 1 bis 4, **dadurch gekennzeichnet, dass** für mindestens einen der Schritte a bis f jeweils mindestens zwei Kammern vorgesehen sind.

## Claims

1. Apparatus for treating workpieces of porous carbon material with liquid silicon to form silicon carbide, consisting of at least four chambers (**O1, O2, O3** and **O4),** which separately can be heated, cooled, evacuated and flushed with gases, and which are connected by sluices to each other, wherein in one embodiment with four chambers each have a chamber for the process steps c and f, and each has a chamber for the process steps a and b and d and e to be executed consecutively therein, wherein the steps are defined as
a preheating of porous carbon workpieces under inert gas to the selected operating temperature T_{B}1 in the chamber **O1** in the range of 1300°C to 1800°C, by introducing the workpieces into the first chamber **O1**, flushing the chamber after closing the sluice with an inert gas stream and heating from room temperature to the operating temperature T_{B}1,
b lowering the pressure in the chamber **O1** at the latest before opening the sluice **20** to the chamber **O2** to the operating pressure of less than 10 hPa,
c supplying liquid silicon to the porous carbon workpieces, which are received by a transport apparatus in the chamber **02** and placed on the pads **26** disposed in the siliconization apparatus, which are formed as porous wicks, at an operating pressure p_{B}2 in the chamber **O2** of at most 1 Pa and an operating temperature T_{B}2 in the chamber **O2** in the range of 1450°C to 1700°C, and saturating the porous carbon workpieces with liquid silicon, wherein the silicon reacts at least partially with the carbon present in the workpiece to silicon carbide under the formation of a siliconized workpiece,
d lifting the siliconized workpieces from the wicks **26** and transporting the siliconized workpieces through the sluice **30** into the chamber **O3**, reaction of the liquid silicon in the workpieces at a temperature T_{B}3 in the chamber **O3** in the range of 1500°C to 1900°C, wherein the operating temperature T_{B}3 in the chamber **O3** is at least 50K higher than the operating temperature T_{B}2 under the formation of silicon carbide from carbon and silicon,
e gassing of the workpiece in the chamber **O3** by blowing cold inert gas and cooling from the operating temperature T_{B}3 to a conditioning temperature Tₖ in the range of 500°C to 300°C, wherein the pressure rises from initially less than 1 hPa to normal pressure of 10⁵ Pa,
f transport of the workpieces **96** through the lock **40** in the chamber **O4**, and cooling the workpieces in position 97 to room temperature, first with inert gas and from temperatures of at most 300°C with air, and removal of the finished workpieces **98** through the sluice **50,**
wherein in which in the chamber **O2** for the process step c a silicating apparatus is provided, which comprises a tank with liquid silicon and executed as porous wicks supports for the workpiece, and wherein the temperature T_{B}3 is at least 50 K higher than the temperature T_{B}2, and the workpiece in the chamber **O3** for the process step d is no longer in contact with liquid silicon outside the workpiece.

2. Apparatus according to claim 1 having five chambers that separately can be heated, cooled, evacuated and flushed with gases, and which are connected to each other by sluices, wherein each separate chambers for the process steps d and e are provided.

3. Apparatus according to claim 1 having five chambers that separately can be heated, cooled, evacuated and flushed with gases, and which are connected to each other by sluices, wherein each separate chambers for the process steps a and b are provided.

4. Apparatus according to claim 1 having six chambers that separately can be heated, cooled, evacuated and flushed with gases, and which are connected to each other by sluices, wherein separate chambers for the process steps a and b and for the process steps d and e are provided.

5. Apparatus according to one of claims 1 to 4, **characterised in that** at least one of the steps a to f at least two chambers are provided respectively.

## Revendications

1. Dispositif de traitement de pièces en carbone poreux avec du silicium liquide avec formation de carbure de silicium, constitué d'au moins quatre chambres **(O1, O2, O3** et **O4)** qui peuvent être séparément chauffées, refroidies, vidées et remplies avec des gaz et qui sont reliées les unes aux autres par des vannes,
dans lequel, dans une forme de réalisation avec quatre chambres, il est prévu à chaque fois une chambre pour les étapes de procédé c et f et à chaque fois une chambre pour les étapes de procédé a et b ainsi que d et e à mettre en oeuvre l'une après l'autre à chaque fois à l'intérieur,
dans lequel les étapes sont définies comme suit
a préchauffage de pièces en carbone poreux dans une atmosphère de gaz inerte à la température de service choisie T_{B}1 dans la chambre **O1** dans une plage allant de 1 300 °C à 1 800 °C, par introduction des pièces dans la première chambre **O1**, rinçage de la chambre après la fermeture de la vanne avec un jet de gaz inerte et chauffage de la température ambiante à la température de service T_{B}1,
b diminution de la pression dans la chambre **O1** au plus tard avant l'ouverture de la vanne **20** vers la chambre **O2** à la pression de service inférieure à 10 hPa,
c amenée du silicium liquide aux pièces de carbone poreux qui ont été reçues par un dispositif de transport dans la chambre **O2** et posées sur les supports **26,** agencés dans le dispositif d'imprégnation de silicium et réalisés sous forme de mèches poreuses, à une pression de service p_{B}2 dans la chambre **O2** de 1 Pa au maximum et à une température de service T_{B}2 dans la chambre **O2** dans une plage allant de 1450 °C à 1700 °C, et imprégnation des pièces en carbone poreux avec du silicium liquide, le silicium réagissant au moins partiellement avec le carbone présent dans la pièce pour former du carbure de silicium, avec formation d'une pièce imprégnée de silicium,
d soulèvement des pièces imprégnées de silicium des mèches **26** et transport des pièces imprégnées de silicium via la vanne **30** dans la chambre **O3**, réaction du silicium liquide dans les pièces à une température T_{B}3 dans la chambre **O3** dans une plage allant de 1 500 °C à 1 900 °C, la température de service T_{B}3 dans la chambre **O3** étant supérieure d'au moins 50 K à la température de service T_{B}2 avec formation de carbure de silicium à partir du carbone et du silicium,
e gazage de la pièce dans la chambre **O3** par insufflation de gaz inerte froid et refroidissement de la température de service T_{B}3 à une température de conditionnement Tₖ dans une plage allant de 500 °C à 300 °C, la pression augmentant de moins de 1 hPa initialement à la pression normale de 10⁵ Pa,
f transport des pièces **96** via la vanne **40** dans la chambre **O4**, et refroidissement des pièces dans la position **97** à la température ambiante, d'abord avec du gaz inerte et à partir de températures de 300 °C au maximum également avec de l'air, et retrait des pièces fabriquées **98** via la vanne **50,**
dans lequel il est prévu dans la chambre **O2** pour l'étape de procédé c un dispositif d'imprégnation de silicium qui comprend un bassin avec du silicium liquide et des supports réalisés sous forme de mèches poreuses pour la pièce
et dans lequel la température T_{B}3 est supérieure d'au moins 50 K à la température de service T_{B}2, et la pièce dans la chambre **O3** pour l'étape de procédé d n'est plus en contact avec le silicium liquide en dehors de la pièce.

2. Dispositif selon la revendication 1 avec cinq chambres qui peuvent être séparément chauffées, refroidies, vidées et remplies avec des gaz et qui sont reliées les unes aux autres par des vannes, dans lequel des chambres séparées sont prévues à chaque fois pour les étapes de procédé d et e.

3. Dispositif selon la revendication 1 avec cinq chambres qui peuvent être séparément chauffées, refroidies, vidées et remplies avec des gaz et qui sont reliées les unes aux autres par des vannes, dans lequel des chambres séparées sont prévues à chaque fois pour les étapes de procédé a et b.

4. Dispositif selon la revendication 1 avec six chambres qui peuvent être séparément chauffées, refroidies, vidées et remplies avec des gaz et qui sont reliées les unes aux autres par des vannes, dans lequel des chambres séparées sont prévues à chaque fois pour les étapes de procédé a et b et pour les étapes de procédé d et e.

5. Dispositif selon l'une quelconque des revendications 1 à 4, **caractérisé en ce qu'**il est prévu à chaque fois au moins deux chambres pour au moins l'une des étapes a à f.
